# EUROPÄISCHE PATENTANMELDUNG

(11) **EP 2 009 649 A2**
(43) Veröffentlichungstag der Anmeldung: **31.12.2008**
(21) Anmeldenummer: 08158272.8
(22) Anmeldetag: 13.06.2008
(51) Int. Cl.: H01F 7/122, H01F 7/16

(54) **Elektropneumatischer Aktor mit einer Handhilfsbetätigung für ein Ventil**

(30) Priorität: 29.06.2007 DE 102007030405
(71) Anmelder: Robert Bosch GmbH, 70442 Stuttgart (DE)
(72) Erfinder: Widera, Jörg, 70839, Gerlingen (DE)
(74) Vertreter: Kietzmann, Lutz

(57) **Zusammenfassung**

Die vorliegende Erfindung betrifft einen elektromagnetischen Aktor für einen Ventil mit einer Spule (1) und einem Flussmantel (2) und elektrisch über die Spule (1) und einen Eisenkern (3) mit einer Rückstellfeder (4) und einem Anker (5) betreibbar, wobei der Eisenkern (3) mit Rückstellfeder (4) und Anker (5) zentrisch in der Spule (1) angeordnet ist und eine Handhilfsbetätigung zum Bewegen des Ankers (5) ohne Ansteuerung der Spule (1) vorgesehen ist, wobei ferner die Handhilfsbetätigung aus einem ersten, nahe im stirnseitigen Bereich der Spule (1) angeordneten, ortsfesten Permanentmagneten (6) und einem zweiten, axial zu der Längsmittelachse der Spule (1) beweglichen Permanentmagneten (7) aufgebaut ist, um den Anker (5) mit Hilfe eines durch beide Permanentmagneten (6, 7) gebildeten Magnetfeldes (9) entgegen der Vorspannung der Rückstellfeder (4) zu bewegen.

## Beschreibung

Die vorliegende Erfindung betrifft einen elektromagnetischen Aktor für ein Ventil mit einer Spule und einem Flussmantel und elektrisch über die Spule und einen Eisenkern mit einer Rückstellfeder und einem Anker betreibbar, wobei der Eisenkern mit Rückstellfeder und Anker zentrisch in der Spule angeordnet ist und eine Handhilfsbetätigung zum Bewegen des Ankers ohne Ansteuerung der Spule vorgesehen ist.

Aktoren dieser Art werden vornehmlich mit pneumatischen oder hydraulischen Ventilen eingesetzt, insbesondere mit Wegeventilen. Im normalen Betriebsfall erfolgt eine Verstellung des Ventils durch eine elektrische Ansteuerung der in dem Aktor integrierten Spule bzw. eine Rückstellung mittels einer Rückstellfeder. Bei der besagten Ansteuerung der Spule wird ein magnetisches Feld ausgebildet, welches eine Bewegung eines in der Mitte der Spule angeordneten Ankers hervorruft. Allerdings kann bei noch nicht erfolgter elektrischen Installation im Zuge der Inbetriebnahme der Anlage eine Verstellung des Ventils noch nicht erfolgen. Aus diesem Grund sind elektrisch ansteuerbare Ventile häufig mit sogenannten Handhilfsbetätigungen ausgestattet. Durch diese kann auch ohne ein durch die Spule ausgebildetes Magnetfeld das Ventil geschaltet werden.

Aus dem Lehrbuch "Elektropneumatik der Pneumatiktrainer, Band 2" der Mannesmann Rexroth Pneumatik GmbH, 1. Ausgabe 1990, Seite 68 ist ein handhilfsbetätigbares elektropneumatisches Ventil bekannt. Bei diesem ist im Falle einer Störung eine Verschiebung des Ankers durch die Drehung einer Schraube der Handhilfsbetätigung möglich. Durch diese mechanische Ausführung der Handhilfsbetätigung sowie einer Rückstellfeder sind die beiden Schaltstellungen des Ventils auch ohne eine elektrische Ansteuerung der Spule realisierbar.

Aus der DE 20 2004 004 861 U1 ist ein pneumatisches Mehrwegeventil mit einer Handhilfsbetätigung bekannt, bei welchem sich durch die nach Art einer Nockenwelle ausgebildeten Handhilfsbetätigung drei Schaltstellungen realisieren lassen. Auch in diesem Fall handelt es sich wieder um eine mechanische Handhilfsbetätigung, bei der durch Rotation der gewünschte Effekt erzielt wird.

Nachteilhaft am bekannten Stand der Technik ist, dass mechanisch auf bewegbare Komponenten eines Ventils, wie Anker oder Verschlusselement, zugegriffen werden muss. Dies stellt bei der Tendenz zu immer kleineren Ventilen aufgrund des nötigen Bauraums ein immer größeres Problem dar.

Es ist daher die Aufgabe der vorliegenden Erfindung, einen elektromagnetischen Aktor mit Handhilfsbetätigung für Ventile zu schaffen, bei welchem die Handhilfsbetätigung platzsparend integriert und trotzdem ein sicheres Schalten des Ventils im Störfall der elektrischen Komponenten gewährleistet ist.

Erfindungsgemäß wird diese Aufgabe dadurch gelöst, dass die Handhilfsbetätigung aus einem ersten, nahe im stirnseitigen Bereich der Spule angeordneten, ortsfesten Permanentmagneten und einem zweiten axial zu der Längsmittelachse der Spule beweglichen Permanentmagneten aufgebaut ist. Denn durch eine Bewegung des zweiten, beweglichen Permanentmagneten in Richtung des ersten kann ein Magnetfeld erzeugt werden, dass groß genug ist, den Anker entgegen der Kraft der Rückstellfeder zu bewegen, ohne dass ein Ansteuern der Spule nötig ist. Durch den niedrigen Bauraumbedarf der Permanentmagneten kann somit eine platzsparende Handhilfsbetätigung realisiert werden.

In Weiterbildung der Erfindung weist der Eisenkern eine axiale Verlängerung auf, die durch eine Ausnehmung in der Mitte des ersten Permanentmagneten durchreicht. Dies hat den Vorteil, dass ein Kontakt zu dem über dem ersten Permanentmagneten liegenden zweiten Permanentmagneten hergestellt werden kann und somit ein ausreichender Magnetfluss in den Eisenkern sichergestellt wird.

In einer weiteren Ausgestaltung der Erfindung weist der zweite Permanentmagnet in der Mitte eine Ausnehmung auf, welche zu der Verlängerung des Eisenkerns korrespondiert. Dadurch wird neben einer optimalen Einleitung des Magnetflusses in den Eisenkern auch eine gute Führung des zweiten Permanentmagneten bei der Bewegung in Richtung Spule realisiert.

In Weiterbildung der Erfindung weist der Flussmantel eine absatzartige Ausnehmung auf, welche die Eintauchtiefe des zweiten Permanentmagneten axial in Richtung der Spule begrenzt. Hierdurch wird eine klare Endlage des zweiten Permanentmagneten definiert und für den Anwender ersichtlich.

In einer weiteren Ausgestaltung der Erfindung ist der zweite Permanentmagnet als ein separates Bauteil ausgebildet, das von dem elektromagnetischen Aktor entfernbar ist. Dies hat den Vorteil, dass eine Betätigung der Handhilfseinrichtung während eines normalen Betriebes des Ventils durch Unbefugte ausgeschlossen werden kann. Außerdem kann der zweite Permanentmagnet für mehrere Aktoren zur Handhilfsbetätigung eingesetzt werden, wodurch die Anzahl an Permanentmagneten reduziert und somit der Herstellungsaufwand gemindert werden kann.

In Weiterbildung der Erfindung ist der zweite Permanentmagnet axial fixierbar. Dadurch ist es möglich, den Anker in einer Stellung entgegen der Vorspannung der Rückstellfeder zu halten, ohne ständige Anwesenheit des Anwenders. Denn durch die gleichpolige Ausrichtung der beiden Permanentmagneten würde der zweite Permanentmagnet durch den Abstoßeffekt axial aus dem Flussmantel heraus bewegt werden.

In einer weiteren Ausgestaltung der Erfindung ist die Rückstellfeder in einer Ausnehmung des Eisenkerns zwischen Eisenkern und Anker positioniert. Dies stellt eine platzsparende Anordnung der Rückstellfeder dar und bietet zudem eine gute Führung von dieser. Alternativ hierzu ist es auch möglich, die Ausnehmung seitens des Ankers anzuordnen.

In Weiterbildung der Erfindung ist der Flussmantel U- oder topfförmig ausgebildet und der erste Permanentmagnet dient gleichzeitig als Flussleitblech. Durch diese Maßnahme kann der Flussmantel den jeweiligen Einsatzbedingungen am Ventil angepasst und unter Umstände Material eingespart werden. Der erste Permanentmagnet sorgt hierbei für ein Schließen des Magnetflusses und unterstützt die Spule.

In einer weiteren Ausgestaltung der Erfindung ist der zweite Permanentmagnet in Anlehnung an die Gestalt des Flussmantels scheiben- bzw. stabförmig ausgebildet. Dadurch wird der zweite Permanentmagnet den konstruktiven Begebenheiten des Flussmantels angepasst und es kann auch hier unter Umständen Material eingespart werden.

Weitere, die Erfindung verbessernde Maßnahmen werden nachstehend gemeinsam mit der Beschreibung eines bevorzugten Ausführungsbeispiels der Erfindung anhand der Figuren näher dargestellt: Es zeigen:
- Fig. 1: eine Prinzipdarstellung des elektromagnetischen Aktors im unbetätigten Zustand, und
- Fig.2: eine Prinzipdarstellung des elektromagnetischen Aktors, wobei in diesem Fall die Handhilfsbetätigung betätigt und die Spule nicht angesteuert ist.

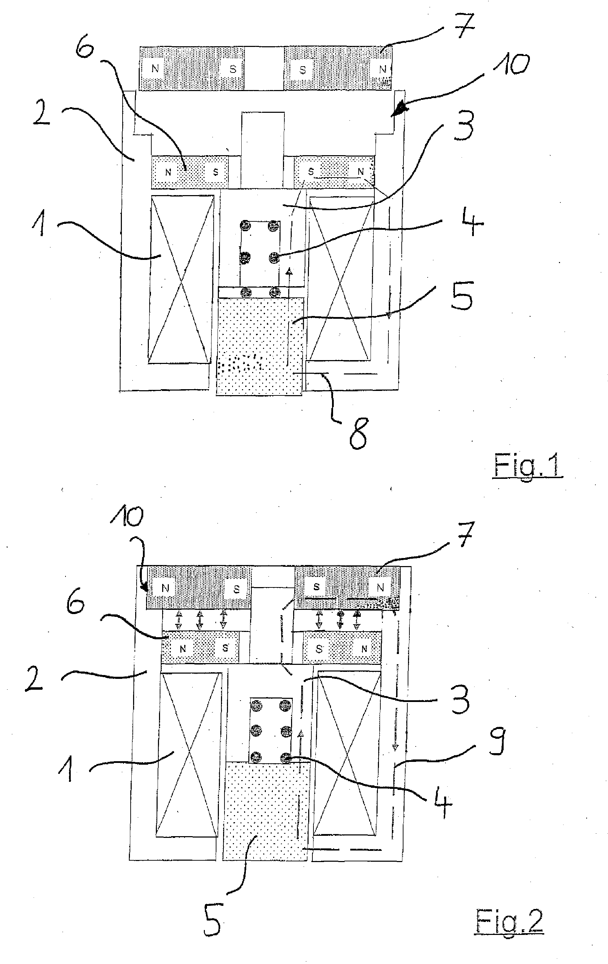

In Fig.1 ist ein erfindungsgemäßer elektromagnetischer Aktor dargestellt. Dieser ist aufgebaut aus einer in einem Flussmantel 2 angeordneten Spule 1, in deren Mitte ein Eisenkern 3 platziert ist. In einer Ausnehmung des Eisenkerns 3 befindet sich eine Rückstellfeder 4, gegen welche ein Anker 5 bewegbar ist. Oberhalb der Spule 1, im Bereich des Eisenkerns 3, ist zudem ein erster Permanentmagnet 6 angeordnet, welcher einen ersten Teil der Handhilfsbetätigung bildet. Oberhalb dieses ersten Permanentmagneten 6 und in Figur 1 außerhalb des Flussmantels 2 ist ein zweiter Permanentmagnet 7 angeordnet, der ein weiteres Bauteil der Handhilfsbetätigung bildet.

Im normalen Betriebsfall wird ein Ventil über den Aktor angesteuert, indem die Spule 1 mit Strom versorgt wird. Dadurch wird ein Magnetfluss 8 in der Mitte der Spule 1 ausgebildet, durch welchen der Anker 5 entgegen der Vorspannung der Rückstellfeder 4 in Richtung Eisenkern 3 bewegt wird. In diesem Fall dient der erste Permanentmagnet 6 als Flussleitblech, d.h. er sorgt für ein Schließen des Magnetflusses 8 in diesem Bereich und unterstützt außerdem die Spule 1 bei der Ausbildung des Magnetflusses 8. Wird die Spule 1 nicht weiter mit Strom versorgt, so drückt die Rückstellfeder 4 den Anker 5 in seine Ausgangsstellung vor Bestromung der Spule 1 zurück. Dementsprechend ist eine Voraussetzung für den gewünschten Betrieb eines Ventils über den Aktor, dass die Kraft des ersten Permanentmagneten 6 kleiner ist als die Kraft der Rückstellfeder 4, da ansonsten ein allein durch den ersten Permanentmagneten 6 ausgebildetes Magnetfeld ausreichen würde, um den Anker 5 in der oberen Stellung zu halten.

In Fig.2 ist derselbe elektromagnetische Aktor dargestellt, nur in diesem Fall bei einer Betätigung der Handhilfsbetätigung. Durch Betätigen der Handhilfsbetätigung wird der zweite Permanentmagnet 7 in eine Schaltstellung unmittelbar oberhalb des ersten Permanentmagneten 6 gebracht. Der sich durch die beiden Permanentmagneten 6 und 7 ausbildende Magnetfluss 9 ist stark genug, um eine Bewegung des Ankers 5 entgegen der Rückstellfeder 4 im Eisenkern 3 zu bewirken. Eine optimale Ausbildung des Magnetflusses 9 wird hierbei unterstützt durch eine axiale Verlängerung des Eisenkerns 3 in Richtung des zweiten Permanentmagneten 7. Dem Fachmann wird klar sein, dass der erste Permanentmagnet 6 und der zweite Permanentmagnet 7 gleichpolig ausgebildet sein müssen, um den in Figur 2 zu sehenden Magnetfluss 9 zu bewirken. Diese Gleichpoligkeit sorgt außerdem dafür, dass der zweite Permanentmagnet 7 ohne axiale Fixierung aufgrund des Abstoßeffekts in eine Ruhestellung, wie in Figur 1 zu sehen, zurückkehrt. In dieser Ruhestellung trägt der zweite Permanentmagnet 7 nicht mehr zu einer Bewegung des Ankers 5 bei.

Die Erfindung ist nicht beschränkt auf das vorstehend beschriebene Ausführungsbeispiel. Es sind vielmehr im Rahmen unterschiedliche Ausbildungen von Ventilen Änderungen denkbar, welche von der erfindungsgemäßen Lehre Gebrauch machen.

### Bezugszeichenliste

- 1: Spule
- 2: Flussmantel
- 3: Eisenkern
- 4: Rückstellfeder
- 5: Anker
- 6: erster Permanentmagnet
- 7: zweiter Permanentmagnet
- 8: Magnetfluss ohne Handhilfsbetätigung
- 9: Magnetfluss mit Handhilfsbetätigung
- 10: absatzartige Ausnehmung

## Patentansprüche

1. Elektromagnetischer Aktor für ein Ventil mit einer Spule (1) und einem Flussmantel (2) und elektrisch über die Spule (1) und einen Eisenkern (3) mit einer Rückstellfeder (4) und einem Anker (5) betreibbar, wobei der Eisenkern (3) mit Rückstellfeder (4) und Anker (5) zentrisch in der Spule (1) angeordnet ist und eine Handhilfsbetätigung zum Bewegen des Ankers (5) ohne Ansteuerung der Spule (1) vorgesehen ist,
**dadurch gekennzeichnet, dass** die Handhilfsbetätigung aus einem ersten, nahe im stirnseitigen Bereich der Spule (1) angeordneten, ortsfesten Permanentmagneten (6) und einem zweiten, axial zu der Längsmittelachse der Spule (1) beweglichen Permanentmagneten (7) aufgebaut ist, um den Anker (5) mit Hilfe eines durch beide Permanentmagneten (6,7) gebildeten Magnetfeldes (9) entgegen der Vorspannung der Rückstellfeder (4) zu bewegen.

2. Elektromagnetischer Aktor nach Anspruch 1,
**dadurch gekennzeichnet, dass** der Eisenkern (3) eine axiale Verlängerung aufweist, die durch eine Ausnehmung in der Mitte des ersten Permanentmagneten (6) hindurch reicht.

3. Elektromagnetischer Aktor nach Anspruch 2,
**dadurch gekennzeichnet, dass** der zweite Permanentmagnet (7) in der Mitte eine Ausnehmung aufweist, die zu der Verlängerung des Eisenkerns (3) korrespondiert.

4. Elektromagnetischer Aktor nach einem der Ansprüche 1-3,
**dadurch gekennzeichnet, dass** der Flussmantel (2) eine absatzartige Ausnehmung (10) aufweist, welche die Eintauchtiefe des zweiten Permanentmagneten (7) axial in Richtung Spule (1) begrenzt.

5. Elektromagnetischer Aktor nach einem der vorherigen Ansprüche,
**dadurch gekennzeichnet, dass** der zweite Permanentmagnet (7) als ein separates Bauteil ausgebildet ist, das von dem elektromagnetischen Aktor entfernbar ist.

6. Elektromagnetischer Aktor nach einem der vorherigen Ansprüche,
**dadurch gekennzeichnet, dass** der zweite Permanentmagnet (7) axial fixierbar ist.

7. Elektromagnetischer Aktor nach einem der vorherigen Ansprüche,
**dadurch gekennzeichnet, dass** die Rückstellfeder (4) in einer Ausnehmung des Eisenkerns (3) zwischen Eisenkern (3) und Anker (5) positioniert ist.

8. Elektromagnetischer Aktor nach einem der vorherigen Ansprüche,
**dadurch gekennzeichnet, dass** der Flussmantel (2) U- oder topfförmig ausgebildet ist und der zu diesem benachbart angeordnete erste Permanentmagnet (6) gleichzeitig als Flussleitblech dient.

9. Elektromagnetischer Aktor nach Anspruch 8,
**dadurch gekennzeichnet, dass** der zweite Permanentmagnet (7) in Anlehnung an die Gestalt des Flussmantels (2) scheiben- bzw. stabförmig ausgebildet ist.

10. Elektromagnetisches Wegeventil zum Schalten mindestens eines Druckluftflusses, umfassend einen elektromagnetischen Aktor gemäß mindestens einem der vorherigen Ansprüche.
